# EUROPÄISCHE PATENTSCHRIFT

(11) **EP 3 307 455 B1**
(45) Veröffentlichungstag und Bekanntmachung des Hinweises auf die Patenterteilung: **13.03.2019**
(21) Anmeldenummer: 16729213.5
(22) Anmeldetag: 30.05.2016
(51) Int. Cl.: B22C 3/00, B29C 33/64, B29C 33/58, B65D 83/14, B65D 83/38, B22C 23/02

(54) **AEROSOLDOSE, SET UND VERFAHREN ZUM AUSBILDEN EINER POLYMEREN FORMTRENNSCHICHT IN EINEM FORMWERKZEUG**
AEROSOL CAN, SET AND METHOD FOR FORMING A POLYMERIC MOULD RELEASE LAYER IN A MOULD
BOMBE AÉROSOL, ENSEMBLE ET PROCÉDÉ POUR FORMER UNE COUCHE DE DÉMOULAGE POLYMÈRE DANS UN OUTIL DE MOULAGE

(30) Priorität: 15.06.2015 DE 102015210970
(43) Veröffentlichungstag der Anmeldung: 18.04.2018
(73) Patentinhaber: CeraNovis GmbH, 66117 Saarbrücken (DE)
(72) Erfinder: MEYER, Frank, 66386 St. Ingbert (DE); HOFMANN, Volker, 66809 Nalbach (DE); HANISCH, Michael, 66583 Spiesen-Elversberg (DE)
(74) Vertreter: Patentanwaltskanzlei Cartagena
(86) Internationale Anmeldenummer: PCT/EP2016/062187
(87) Internationale Veröffentlichungsnummer: WO 2016/202567

(56) Entgegenhaltungen:
- US-A- 4 429 814
- US-B1- 6 322 850
- US-B1- 7 198 205

## Beschreibung

Die vorliegende Erfindung betrifft eine Aerosoldose zum Versprühen einer Beschichtungszusammensetzung zwecks Ausbildung einer polymeren Formtrennschicht in einem Formwerkzeug. Weiterhin betrifft die Erfindung ein Set umfassend eine solche Aerosoldose und ein Verfahren zum Ausbilden einer polymeren Formtrennschicht unter Verwendung einer solchen Aerosoldose.

In der Gießereitechnik werden für den Metallguss hitzebeständige Gießformen benötigt, die in der Regel aus einer Formstoffmischung umfassend einen partikulären, feuerfesten Formgrundstoff und ein Bindemittel hergestellt werden. Das Bindemittel hat die Aufgabe, die Partikel des feuerfesten Formgrundstoffs zusammenzuhalten, um eine hinreichende mechanische Festigkeit der hergestellten Form beim Gießen zu ermöglichen. Eine besondere Herausforderung stellt die Herstellung von Formen für Gießereiprodukte dar, welche in ihrem Inneren Hohlräume aufweisen. Zur Herstellung solcher Hohlräume werden Formkerne benötigt, die man innerhalb einer Gießform anordnen kann und deren äußere Form der Innenkontur des Hohlraums in dem zu gießenden Metallprodukt entspricht. Der Formkern ist also Teil der Gießform. Im Anschluss an das Gießen sollte der Formkern wieder aus dem gegossenen Produkt entfernt werden können. Er muss also lösbar oder unter vertretbarem Aufwand zerkleinerbar sein.

Als Formgrundstoff zur Herstellung von Formen und Formkernen für den Metallguss dient meist ein feuerfester mineralischer Sand. Als Bindemittel kommen meist Phenol- und Furanharze, insbesondere auch Phenol-Novolak-Harze, in Frage. Eine Formstoffmischung enthaltend Sand als Grundstoff und eines der genannten Bindemittel wird als "Kernsand" bezeichnet. Hieraus hergestellte Kerne und Formen werden konsequenterweise als Sandkerne und Sandformen bezeichnet.

Zur Herstellung von Sandkernen wird meist auf das bewährte Cold-Box-Verfahren zurückgegriffen. Bei diesem finden zur Herstellung der Sandkerne als "Kernkästen" bezeichnete, nicht erwärmte Formwerkzeuge Verwendung. Man benötigt also Bindemittel, die auch bei Raumtemperatur schnell aushärten können. Vorteile des Cold-Box-Verfahrens sind insbesondere niedrige Werkzeug- und Energiekosten sowie kurze Taktzeiten und hohe Produktivität.

Zur Herstellung der Sandkerne werden Formstoffmischungen unter meist hohem Druck in den erwähnten Kernkasten eingeschossen. Die mechanische Belastung des Kernkastens ist an den Stellen, an denen die Formstoffmischung auftrifft, außerordentlich hoch. Weiterhin kommt es häufig zu Anhaftungen und Anbackungen der Formstoffmischung an den Wänden des Kernkastens, die äußerst unerwünscht sind, da sie sich im fertigen Gussprodukt wiederspiegeln können. Insbesondere können die Anhaftungen und Anbackungen auch die Entnahme von hergestellten Sandkernen aus Kernkästen erschweren.

Um den genannten Problemen entgegenzuwirken, ist es üblich, das Innere von Kernkästen zumindest an definierten Stellen mit einer sogenannten Formtrennschicht zu überziehen. Diese Formtrennschicht soll zum einen die mechanischen Belastungen, die beim Einschießen des Formsands in den Kernkasten entstehen, abmildern. Zum anderen sollen die erwähnten Anhaftungen und Anbackungen verhindert und somit die Entnahme von hergestellten Sandkernen aus mit der Formtrennschicht versehenen Kernkästen erleichtert werden.

Zusammensetzungen und Vorgehensweisen zur Bildung solcher Formtrennschichten sind aus der WO 2009/083201 A1 bekannt. Hier werden insbesondere silikonbasierte Formtrennmittel beschrieben, die durch Aufsprühen eines Silikonvorläufers mittels einer Sprühpistole oder durch ein Tauchverfahren appliziert werden können. In der Praxis werden die in der WO 2009/083201 A1 beschriebenen Silikonvorläufer häufig auch mittels eines Pinsels aufgetragen.

Beim Auftragen der in der WO 2009/083201 A1 beschriebenen Silikonvorläufer traten in der Vergangenheit häufig Probleme auf. Beim Auftrag mittels eines Pinsels ist eine effiziente Schichtdickenkontrolle nicht möglich. Der Auftrag mittels einer Sprühpistole erwies sich als ausgesprochen unpraktikabel, da der Silikonvorläufer häufig bereits in der Sprühpistole oder in einer Zuleitung zu der Sprühpistole zu einem hochvernetzten Silikon aushärtete und zu Verstopfungen führte. Zudem erfordert das Auftragen mittels einer Sprühpistole eine relativ teure Anlagentechnik.

Aus der US 7198205 B1 ist eine Spraydose zum Versprühen einer Silikonzusammensetzung bekannt. Bestandteile der Spraydose und deren Beschaffenheit sind nicht beschrieben.

Aus der US 4,429,814 ist darüber hinaus eine Aerosoldose zum Versprühen einer thermisch aushärtbaren Polyurethanverbindung bekannt, wobei der Sprühkopf und das Steigrohr aus einem Polymerwerkstoff mit geringem Feuchtigkeitsgehalt bestehen, um ein Verstopfen der Zuleitungen zu verhindern.

Der vorliegenden Erfindung lag die Aufgabe zugrunde, eine Lösung für die vorgenannten Probleme zu finden.

Diese Aufgabe wird gelöst durch die Aerosoldose mit den Merkmalen des Anspruchs 1 sowie das Set mit den Merkmalen des Anspruchs 8 sowie durch das Verfahren mit den Merkmalen des Anspruchs 12. Bevorzugte Ausführungsformen der erfindungsgemäßen Aerosoldose sind in den abhängigen Ansprüchen 2 bis 7 angegeben. Bevorzugte Ausführungsformen des erfindungsgemäßen Sets finden sich in den abhängigen Ansprüchen 9 bis 11. Der Wortlaut sämtlicher Ansprüche wird hiermit durch Bezugnahme zum Inhalt der vorliegenden Beschreibung gemacht.

Bei einer Aerosoldose (oder auch Sprüh- oder Spraydose) handelt es sich bekanntlich um eine Dose zum Versprühen flüssiger Medien oder in flüssigen Medien dispergierter partikulärer Feststoffe. Diese sind als Gemisch mit einem Treibmittel in der Dose unter Druck eingeschlossen. Durch Betätigung eines Ventils kann man das Gemisch aus der Dose entweichen lassen. Der Austrag des Gemisches erfolgt dabei in der Regel über einen Sprühkopf bzw. eine in dem Sprühkopf integrierte Düse. Diese gewährleistet eine Zerstäubung des austretenden Gemischs.

Mit Hilfe einer erfindungsgemäßen Aerosoldose lässt sich eine polymere Formtrennschicht in einem Formwerkzeug bilden. Hierzu wird mit der Aerosoldose eine Beschichtungszusammensetzung in das Formwerkzeug gesprüht, beispielsweise eine der aus der WO 2009/083201 A1 bekannten Beschichtungszusammensetzungen. Die erfindungsgemäße Aerosoldose ist speziell dafür ausgebildet, dass es dabei nicht zu Verstopfungen kommt, wie sie bei Sprühpistolen auftreten. Um dies zu gewährleisten, zeichnet sich die erfindungsgemäße Aerosoldose durch spezifische Merkmale aus.

Eine Aerosoldose gemäß der Erfindung umfasst einen Behälter, ein Ventil, ein Steigrohr und einen Sprühkopf mit einer Austragöffnung, wobei der Behälter mit der Beschichtungszusammensetzung zur Herstellung der polymeren Formtrennschicht befüllt ist. Die Beschichtungszusammensetzung umfasst mindestens einen Silkonvorläufer, also einen Stoff oder ein Stoffgemisch, der oder das zu einem Silikon polymerisieren oder vernetzen oder vernetzt werden kann, und liegt im Gemisch mit einem Treibmittel vor.

In ihrer konstruktiven Ausgestaltung unterscheidet sich eine erfindungsgemäße Aerosoldose zunächst einmal nicht von aus dem Stand der Technik bekannten Aerosoldosen. Das Steigrohr ist in aller Regel in den Behälter eingeschoben, um einen möglichst vollständigen Austrag des Behälterinhalts zu ermöglichen. Sein oberes Ende ist bevorzugt unmittelbar an das Ventil gekoppelt. Die Betätigung des Ventils erfolgt bevorzugt durch Drücken des Sprühkopfs. Sobald das Ventil geöffnet ist, drückt das Treibmittel die Beschichtungszusammensetzung aus der Dose. Bevorzugt tritt die Beschichtungszusammensetzung über eine als Düse ausgebildete Austragöffnung in fein zerstäubter Form aus. So lässt sich die Dicke der aus der Beschichtungszusammensetzung gebildeten Formtrennschicht gut kontrollieren.

Die Verwendung von Aerosoldosen zur Herstellung von Formtrennschichten bietet offensichtliche Vorteile. Aerosoldosen können ortsunabhängig eingesetzt werden. Zur Applikation der Formtrennschicht mit Aerosoldosen wird keinerlei Anlagentechnik benötigt. Ungeachtet dessen lag die Verwendung von Aerosolspraydosen zum Aufbringen einer einen Silikonvorläufer enthaltenden Beschichtungszusammensetzung nicht nahe. Versuche der Anmelderin, handelsübliche Aerosoldosen mit einen Silkonvorläufer enthaltenden Beschichtungszusammensetzungen zu befüllen und diese zur Herstellung von Formtrennschichten zu verwenden, waren zunächst ausnahmslos gescheitert, da es - wie bei den erwähnten Sprühpistolen - sehr schnell zu Verstopfungen kam, insbesondere im Sprühkopf und im Ventil. Diese Probleme traten selbst dann auf, wenn vor dem Befüllen der Aerosoldosen die verwendeten Treibmittel und die Komponenten der Beschichtungszusammensetzung sorgfältig getrocknet wurden und auch der Abfüllvorgang selbst in einer feuchtigkeitsfreien Atmosphäre durchgeführt wurde.

Aus Kostengründen werden viele Komponenten von Aerosoldosen, insbesondere das Ventil und der Sprühkopf, weitestgehend aus Kunststoff gefertigt. Besonders bevorzugt werden in handelsüblichen Spraydosen Kunststoffkomponenten aus Polyamid verwendet. Es ist in der Regel unvermeidbar, dass zumindest eines oder einige der zur Konstruktion der Aerosoldose verwendeten Kunststoffkomponenten bei bestimmungsgemäßer Betätigung der Aerosoldose in Kontakt mit der aus der Dose auszutragenden Beschichtungszusammensetzung kommen.

Dies ist auch bei einer erfindungsgemäßen Aerosoldose so. Die erfindungsgemäße Aerosoldose umfasst mindestens ein Kunststoffteil, das bei bestimmungsgemäßer Verwendung der Dose mit der Beschichtungszusammensetzung in unmittelbaren Kontakt tritt. Bevorzugt sind insbesondere der komplette Sprühkopf sowie das erwähnte Steigrohr aus Kunststoff gefertigt. Darüber hinaus bestehen bevorzugt auch die meisten Komponenten des Ventils aus Kunststoff.

Die erfindungsgemäße Aerosoldose zeichnet sich insbesondere dadurch aus, dass sie als mindestens einen Silikonvorläufer mindestens ein hydrolysierbares Silan enthält und dass das erwähnte mindestens eine Kunststoffteil, das bei bestimmungsgemäßer Verwendung der Dose mit der Beschichtungszusammensetzung in unmittelbaren Kontakt tritt, aus mindestens einem wasserfreien Polymermaterial besteht, das nicht durch eine Polykondensation gebildet wurde. Besonders bevorzugt bestehen alle Kunststoffteile der Aerosoldose, die bei bestimmungsgemäßer Verwendung der Dose mit der Beschichtungszusammensetzung in unmittelbaren Kontakt treten, aus einem wasserfreien Polymermaterial.

Überraschenderweise wurde gefunden, dass bei Verwendung nicht durch Polykondensation gebildeter Polymermaterialien die genannten Verstopfungsprobleme nicht auftreten. Durch Polykondensation gebildete Kunststoffe wie Polyamide enthalten stets und nahezu unvermeidlich noch einen Anteil Kondensatwasser. Dieser Anteil ist sehr klein, scheinbar aber groß genug, um mit hydrolyseempfindlichen Silanmaterialien abzureagieren und die genannten Probleme hervorrufen zu können. Nicht durch Polyaddition gebildete Polymermaterialien eignen sich nach allen bisherigen Untersuchungen hingegen hervorragend für die Fertigung von Aerosoldosen zum Austrag hydrolyseempfindlicher Silanmaterialien.

Als besonders geeignet haben sich Polymermaterialien erwiesen, die durch eine Kettenpolymerisation oder durch eine Polyaddition gebildet sind. Besonders bevorzugt umfasst das mindestens eine wasserfreie Polymermaterial mindestens ein Material aus der Gruppe mit Polyolefin, insbesondere Polyethylen und Polypropylen, und Polyether, insbesondere Polyoxymethylen und Epoxidharz-basierter Polyether.

Der mindestens eine Silikonvorläufer umfasst bevorzugt
- als hydrolysierbares Silan mindestens einen Vernetzer aus der Gruppe mit Methyltrimethoxysilan, Methyltriethoxysilan, Vinyltrimethoxysilan, Vinyltriethoxysilan, Methylphenyldimethoxysilan, 3,3, 3-Trifluoropropyltrimethoxysilan, Methyltriacetoxysilan, Vinyltriacetoxysilan, Ethyltriacetoxysilan, Di-butoxydiacetoxysilan, Phenyl-tripropionoxysilan, Methyl-tris-(methylethylketoximo)silan, Vinyl-tris-methylethylketoximo)silan, Methyl-tris-(methylethylketoximino)silan, Methyl-tris-(isopropenoxy)silan und Vinyl-tris-(isopropenoxy)silan
und/oder
- mindestens ein Oligo- oder Polysiloxan, das mit dem mindestens einen Vernetzer ein vernetztes, gummielastisches Silikon ausbilden kann, bevorzugt ein Polydimethylsiloxan, insbesondere ein silanolgruppenhaltiges Polydimethylsiloxan.

Besonders bevorzugt umfasst der Silikonvorläufer das Polydimethylsiloxan und als Vernetzer für das Polydimethylsiloxan Methyltriacetoxysilan. Das durch Vernetzung des Polydimethylsiloxans entstehende gummielastische Silikon ist besonders gut dazu geeignet, die eingangs erwähnten mechanischen Belastungen, die beim Einschießen des Formsands in den Kernkasten entstehen, abzufedern.

Entsprechend des Verwendungszwecks einer erfindungsgemäßen Aerosoldose, dem Ausbilden einer polymeren Formtrennschicht, handelt es sich bei dem Formwerkzeug insbesondere um einen Kernkasten, besonders bevorzugt um einen Kernkasten aus Metall. Besonders bevorzugt eignen sich die mit der erfindungsgemäßen Aerosoldose herstellbaren Formtrennschichten für die eingangs genannten Cold-Box-Verfahren.

Die erfindungsgemäße Aerosoldose zeichnet sich in bevorzugten Ausführungsformen durch mindestens eines der folgenden Merkmale aus:
- Der Behälter besteht bevorzugt aus Metall, gegebenenfalls auch aus Metall mit einer polymeren Innenbeschichtung. Im letzteren Fall besteht die Innenbeschichtung bevorzugt ebenfalls aus einem der genannten wasserfreien Polymermaterialien.
- Das Steigrohr besteht aus einem der genannten wasserfreien Polymermaterialien.
- Das Ventil besteht in wesentlichen Teilen aus einem der genannten wasserfreien Polymermaterialien.
- Der Sprühkopf besteht in wesentlichen Teilen aus einem der genannten wasserfreien Polymermaterialien.
- Die Aerosoldose umfasst neben den genannten Komponenten noch weitere Teile, zum Beispiel Dichtungen, die aus dem wasserfreien Polymermaterial gefertigt sind.

Bei dem in einer erfindungsgemäßen Aerosoldose enthaltenen Treibmittel handelt es sich bevorzugt um mindestens ein Gas aus der Gruppe mit Propan, Butan, Isobutan, Dimethylether und Stickstoff. Bevorzugt wird ein Treibmittel hoher Reinheit verwendet. Besonders bevorzugt wird das Treibmittel, bevor es in eine erfindungsgemäße Aerosoldose eingefüllt wird, getrocknet.

Die Beschichtungszusammensetzung umfasst vorzugsweise mindestens ein wasserfreies Lösungsmittel, bevorzugt ein aprotisches Lösungsmittel, insbesondere ein Lösungsmittel auf Basis von aliphatischen und/oder auf Basis von aromatischen Kohlenwasserstoffen, besonders bevorzugt ein Lösungsmittel aus der Gruppe mit Cyclohexan, Cycloheptan und Benzin. Auch das mindestens eine Lösungsmittel wird vorzugsweise getrocknet, bevor es zu der Beschichtungszusammensetzung verarbeitet und/oder bevor es in die erfindungsgemäße Aerosoldose eingeführt wird.

Weiterhin kann die Beschichtungszusammensetzung einen partikulären Feststoff enthalten, insbesondere als Pigment oder als funktionales Additiv oder einfach als Füllstoff. Als Pigment kann die Beschichtungszusammensetzung beispielsweise α-Eisenoxid enthalten. Als funktionale Additive kommen insbesondere Schichtsilikate, hexagonales Bornitrid und Graphit in Frage, etwa um die Elastizität und Benetzbarkeit der herzustellenden Formtrennschicht zu beeinflussen. Als Füllstoffe kann die Beschichtungszusammensetzung beispielsweise Siliziumdioxid oder Titandioxid enthalten. Diese können z.B. die Abrasionsstabilität der herzustellenden Formtrennschicht erhöhen.

Es ist bevorzugt, dass die Beschichtungszusammensetzung den mindestens einen Silikonvorläufer in einem Anteil im Bereich von 1 Gew.-% bis 15 Gew.-% enthält.

Es ist bevorzugt, dass die Beschichtungszusammensetzung das mindestens eine wasserfreie Lösungsmittel in einem Anteil von 40 Gew.-% bis 60 Gew.-% enthält.

Es ist bevorzugt, dass die Beschichtungszusammensetzung den mindestens einen partikulären Feststoff in einem Anteil von 1 Gew.-% bis 40 Gew.-% enthält.

Die vorliegende Erfindung erstreckt sich nicht nur auf die beschriebene Aerosoldose, sondern auch auf ein Set, das die beschriebene Aerosoldose als erste Aerosoldose enthält. Neben der ersten Aerosoldose umfasst das erfindungsgemäße Set noch eine zweite Aerosoldose, die mit einem mindestens einen funktionalisierten Silan mit haftvermittelten Eigenschaften befüllt ist.

Zweck der zweiten Aerosoldose ist die Ausbildung einer Grundierungsbeschichtung in dem Formwerkzeug bevor die beschriebene polymere Formtrennschicht aufgebracht wird. Die zweite Aerosoldose enthält bevorzugt mindestens eine der folgenden Verbindungen:
Ein Silan der Formel (R₁O)₃Si-(CH₂)ₙ-NH-(CH₂)m-X oder (R₁O)₃Si-(CH₂)ₙO-(CH₂)m-X oder (R₁O)₃Si-(CH₂)ₙ-NH-(CH₂)m- NH-(CH₂)ₙ-Si(OR₁)₃ mit R₁ = eine C₁- bis C₅-Alkylgruppe und n = 1-5 und m = 1-5 und X = eine Amin- oder eine Epoxygruppe, insbesondere ein Silan aus der Gruppe mit 3-Glycidyloxypropyltrimethoxysilan, N-(3-(Trimethoxysilyl)propyl)ethylendiamin und N,N'-Bis[3-(trimethoxysilyl)propyl]ethylendiamin, umfasst

Keine dieser Verbindungen ist in dem Maß hydrolyseempfindlich wie die zur Ausbildung der Formtrennschicht vorgesehenen Silane. Aus diesem Grund ist es auch nicht zwingend erforderlich, die zweite Aerosoldose analog zur ersten mit wasserfreien Kunststoffen auszustatten. Plastikkomponenten der zweiten Aerosoldose können daher ohne weiteres auch aus einem durch Polykondensation hergestellten Kunststoff wie einem Polyamid bestehen.

Die zweite Aerosoldose enthält bevorzugt ein Treibmittel, wie es auch für die erste Aerosoldose gewählt wird. Darüber hinaus enthält sie bevorzugt mindestens ein wasserfreies Lösungsmittel, insbesondere eines der Lösungsmittel, das sich auch für die in der ersten Aerosoldose enthaltene Beschichtungszusammensetzung eignet.

Das Set kann weiterhin noch eine dritte Aerosoldose umfassen. Diese ist gegebenenfalls mit einem flüssigen Silikonentferner befüllt, insbesondere aus der Gruppe mit Tensiden, Benzin, Alkoholen, aromatische Kohlenwasserstoffe und aliphatische Kohlenwasserstoffe. Bevorzugt enthält sie zusätzlich mindestens eines der genannten wasserfreien Lösungsmittel und/oder eines der genannten Treibmittel.

Es ist zweckmäßig, die Bereiche des Formtrennkastens, auf die die Formtrennschicht sowie gegebenenfalls zuvor die erwähnte Grundierung aufgebracht werden soll, sorgfältig zu reinigen, bevor ein Auftrag der Schicht oder der Schichten erfolgt. Diese Reinigung kann unter Verwendung der dritten Aerosoldose durchgeführt werden.

Jedes Verfahren zur Ausbildung einer polymeren Formtrennschicht in einem Formwerkzeug unter Verwendung der beschriebenen Aerosoldose oder des beschriebenen Sets ist von der vorliegenden Erfindung umfasst. In allen bevorzugten Ausführungsformen des Verfahrens wird
- eine Oberfläche des Formwerkzeugs durch Sprühen eines funktionalisierten Silans mit haftvermittelten Eigenschaften unter Einsatz der zweiten Aerosoldose funktionalisiert und
- eine Beschichtungszusammensetzung unter Einsatz der ersten Aerosoldose auf die funktionalisierte Oberfläche gesprüht.

Bevorzugt wird in vorgeschalteten Schritten die zu beschichtende Oberfläche gereinigt, insbesondere durch Eisstrahlen sowie unter Verwendung eines flüssigen Silikonentferners, insbesondere unter Verwendung der beschriebenen dritten Aerosoldose.

Nach Auftrag der Grundierung lässt man die Grundierung bevorzugt einige Minuten ablüften und härten. Analoges gilt auch nach dem Auftrag der eigentlichen Formtrennschicht.

Weitere Merkmale der Erfindung sowie aus der Erfindung resultierende Vorteile ergeben sich aus der nachfolgenden Beschreibung einiger bevorzugter Ausführungsformen. Diese dienen lediglich zur Erläuterung und zum besseren Verständnis der Erfindung und sind in keiner Weise einschränkend zu verstehen.

### Ausführungsbeispiel

Ein Kernkasten aus Metall soll innenseitig mit einer Formtrennschicht versehen werden. Die zu beschichtende Oberfläche des Kernkastens wurde hierzu zunächst mittels Eisstrahlen und anschließend mittels eines Silikonentferners gereinigt. Der Silikonentferner wurde hierbei mittels einer Aerosoldose auf das Substrat aufgebracht. Anschließend wurde der gereinigte Kernkasten mit einer Grundierungszusammensetzung besprüht. Die exakte Zusammensetzung der Grundierungszusammensetzung war wie folgt:

| | |
|---|---|
| • 98 Gew.-% | Cyclohexan |
| • 0,5 Gew.-% | 3-Glycidyloxypropyltrimethoxysilan |
| • 0,5 Gew.-% | N-(3-(Trimethoxysilyl)propyl)ethylendiamin |
| • 0.5 Gew.-% | Ethylendiamin |
| • 0,5 Gew.-% | N,N'-Bis[3-(trimethoxysilyl)propyl]ethylendiamin |

Als Treibmittel wurde ein Gemisch aus Butan, Propan und Isobutan verwendet.

Der Auftrag der Grundierungszusammensetzung erfolgte ebenfalls mittels einer Aerosoldose. Die Applikation erfolgte bei Raumtemperatur. Nach der Applikation ließ man die Grundierung zwischen 10 und 15 Minuten aushärten, wobei während des Aushärtens für ausreichende Belüftung gesorgt wurde.

Anschließend wurde die Formtrennschicht auf die zumindest teilgehärtete Grundierung aufgebracht, bevorzugt ebenfalls bei Raumtemperatur. Die Beschichtungszusammensetzung wies die folgenden Komponenten in den folgenden Anteilen auf:
- 55 Gew.-% Cyclohexan
- 10 Gew.-% einer Mischung aus Polydimethylsiloxan (Elastosil E60, Wacker Chemie) und Methyltriacetoxysilan im Verhältnis 10:1.

Als Treibmittel wurde ein Gemisch aus Butan, Propan und Isobutan verwendet.

Enthalten war die Beschichtungszusammensetzung in einer Aerosoldose. Diese umfasst ein Steigrohr und einen Sprühkopf aus Kunststoff. Weiterhin bestand auch das Ventil der Sprühdose, abgesehen von einer metallischen Feder, aus Kunststoff. Bei dem Kunststoff handelte es sich in allen Fällen um Polyoxymethylen.

Die Aerosoldose war unter Standardbedingungen ungeöffnet über mehrere Monate lagerfähig. Nach Gebrauch ließen sich das Steigrohr sowie das Ventil und der Sprühkopf durch Spülen mit dem Treibmittel reinigen. Hierzu wurde die Dose mit dem Sprühkopf nach unten weisend mehrmals kurz betätigt. Eine Wiederverwendung der Dose nach dem ersten Gebrauch was unter Beachtung dieser Maßnahme problemlos möglich.

## Patentansprüche

1. Aerosoldose zum Versprühen einer Beschichtungszusammensetzung zwecks Ausbildung einer polymeren Formtrennschicht in einem Formwerkzeug,
• wobei die Aerosoldose einen Behälter, ein Ventil, ein Steigrohr und einen Sprühkopf mit einer Austragöffnung umfasst,
• wobei der Behälter mit der Beschichtungszusammensetzung befüllt ist,
• wobei die Beschichtungszusammensetzung mindestens einen Silikonvorläufer umfasst und im Gemisch mit einem Treibmittel vorliegt, und
• wobei die Aerosoldose mindestens ein Kunststoffteil umfasst, das bei bestimmungsgemäßer Verwendung der Aerosoldose mit der Beschichtungszusammensetzung in unmittelbaren Kontakt tritt,
**dadurch gekennzeichnet, dass**
• der mindestens eine Silikonvorläufer mindestens ein hydrolysierbares Silan umfasst und dass das mindestens eine Kunststoffteil aus einem wasserfreien Polymermaterial besteht, das nicht durch eine Polykondensationsreaktion gebildet wurde.

2. Aerosoldose nach Anspruch 1, **dadurch gekennzeichnet, dass** das mindestens eine Polymermaterial durch Kettenpolymerisation oder Polyaddition gebildet wurde.

3. Aerosoldose nach einem der Ansprüche 1 oder 2, **dadurch gekennzeichnet, dass** das mindestens eine Polymermaterial mindestens ein Material aus der Gruppe mit Polyolefin, insbesondere Polyethylen und Polypropylen, und Polyether, insbesondere Polyoxymethylen und epoxidharzbasierter Polyether, umfasst.

4. Aerosoldose nach einem der Ansprüche 1 bis 3, **dadurch gekennzeichnet, dass** der mindestens eine Silikonvorläufer
• als hydrolysierbares Silan mindestens einen Vernetzer aus der Gruppe mit Methyltrimethoxysilan, Methyltriethoxysilan, Vinyltrimethoxysilan, Vinyltriethoxysilan, Methylphenyldimethoxysilan, 3,3, 3-Trifluoropropyltrimethoxysilan, Methyltriacetoxysilan, Vinyltriacetoxysilan, Ethyltriacetoxysilan, Di-butoxydiacetoxysilan, Phenyl-tripropionoxysilan, Methyl-tris-(methylethylketoximo)silan, Vinyl-tris-methylethylketoximo)silan, Methyl-tris-(methylethylketoximino)silan, Methyl-tris-(isopropenoxy)silan und Vinyl-tris-(isopropenoxy)silan
und/oder
• mindestens ein Oligo- oder Polysiloxan, das mit dem mindestens einen Vernetzer ein vernetztes, gummielastisches Silikon ausbilden kann, bevorzugt ein Polydimethylsiloxan, insbesondere ein silanolgruppenhaltiges Polydimethylsiloxan,
umfasst.

5. Aerosoldose nach einem der vorhergehenden Ansprüche, **dadurch gekennzeichnet, dass** es sich bei dem Formwerkzeug um einen Kernkasten handelt, insbesondere um einen Kernkasten aus Metall.

6. Aerosoldose nach einem der vorhergehenden Ansprüche, **gekennzeichnet durch** mindestens eines der folgenden Merkmale:
• Der Behälter besteht aus Metall, gegebenenfalls Metall mit einer polymeren Innenbeschichtung.
• Das Steigrohr besteht aus dem wasserfreien Polymermaterial.
• Das Ventil besteht in wesentlichen Teilen, gegebenenfalls vollständig, aus dem wasserfreien Polymermaterial.
• Der Sprühkopf besteht in wesentlichen Teilen, gegebenenfalls vollständig, aus dem wasserfreien Polymermaterial.
• Die Aerosoldose umfasst neben den genannten noch weitere Teile, z.B. Dichtungen, aus dem wasserfreien Polymermaterial.

7. Aerosoldose nach einem der vorhergehenden Ansprüche, **gekennzeichnet durch** mindestens eines der folgenden Merkmale:
• Das Treibmittel umfasst mindestens ein Gas aus der Gruppe mit Propan, Butan, Isobutan, Dimethylether und Stickstoff.
• Die Beschichtungszusammensetzung umfasst mindestens ein wasserfreies Lösungsmittel.
• Die Beschichtungszusammensetzung enthält umfasst mindestens einen partikulären Feststoff, insbesondere als Pigment und/oder als Additiv und/oder als Füllstoff.
• Die Beschichtungszusammensetzung enthält den mindestens einen Silikonvorläufer in einem Anteil im Bereich von 1 Gew.-% bis 15 Gew.-%.
• Die Beschichtungszusammensetzung enthält das mindestens eine wasserfreie Lösungsmittel in einem Anteil im Bereich von 40 Gew.-% bis 60 Gew.-%.
• Die Beschichtungszusammensetzung enthält den mindestens einen partikulären Feststoff in einem Anteil im Bereich von 1 Gew.-% bis 40 Gew.-%.

8. Set zum Ausbilden einer polymeren Formtrennschicht in einem Formwerkzeug, umfassend eine erste Aerosoldose nach einem der vorhergehenden Ansprüche und eine zweite Aerosoldose, die mit mindestens einem funktionalisierten Silan mit haftvermittelnden Eigenschaften befüllt ist.

9. Set nach Anspruch 8, **dadurch gekennzeichnet, dass** die zweite Aerosoldose mindestens ein Silan der Formel (R₁O)₃Si-(CH₂)ₙ-NH-(CH₂)m-X oder (R₁O)₃Si-(CH₂)ₙ-O-(CH₂)m-X oder (R₁O)₃Si-(CH₂)ₙ-NH-(CH₂)m- NH-(CH₂)ₙ-Si(OR₁)₃ mit R₁ = eine C₁- bis C₅-Alkylgruppe und n = 1-5 und m = 1-5 und X = eine Amin- oder eine Epoxygruppe, insbesondere ein Silan aus der Gruppe mit 3-Glycidyloxypropyltrimethoxysilan, N-(3-(Trimethoxysilyl)propyl)ethylendiamin und N,N'-Bis[3-(trimethoxysilyl)propyl]ethylendiamin, umfasst.

10. Set nach einem der Ansprüche 8 oder 9, **gekennzeichnet durch** mindestens eines der folgenden Merkmale:
• Die zweite Aerosoldose enthält ein Treibmittel, insbesondere mindestens ein Gas aus der Gruppe mit Propan, Butan, Isobutan, Dimethylether und Stickstoff.
• Die zweite Aerosoldose enthält mindestens ein wasserfreies Lösungsmittel.

11. Set nach einem der Ansprüche 8 bis 10, umfassend eine dritte Aerosoldose, die mit mindestens einem flüssigen Silikonölentferner befüllt ist, insbesondere aus der Gruppe mit Tensiden, Benzin, Alkoholen, aromatischen Kohlenwasserstoffen und aliphatischen Kohlenwasserstoffen.

12. Verfahren zum Ausbilden einer polymeren Formtrennschicht in einem Formwerkzeug unter Verwendung eines Sets nach einem der Ansprüche 8 bis 11, umfassend die Schritte
• Funktionalisieren einer Oberfläche des Formwerkzeugs durch Sprühen des funktionalisierten Silans mit haftvermittelnden Eigenschaften unter Einsatz der zweiten Aerosoldose auf die Oberfläche und
• Sprühen der Beschichtungszusammensetzung unter Einsatz der ersten Aerosoldose auf die funktionalisierte Oberfläche.

## Claims

1. Aerosol can for spraying a coating composition in order to form a polymeric mould release layer in a mould,
• where the aerosol can comprises a container, a valve, a riser tube and a spraying head with a discharge opening,
• where the container is filled with the coating composition,
• where the coating composition comprises at least one silicone precursor and is present in a mixture with a propellant, and
• where the aerosol can comprises at least one plastics part which, when the aerosol can is used as intended, comes into direct contact with the coating composition,
**characterized in that**
• the at least one silicone precursor comprises at least one hydrolysable silane and **in that** the at least one plastics part consists of a water-free polymer material which has not been formed by a polycondensation reaction.

2. Aerosol can according to Claim 1, **characterized in that** the at least one polymer material has been formed by chain polymerization or polyaddition.

3. Aerosol can according to either of Claims 1 and 2, **characterized in that** the at least one polymer material comprises at least one material from the group composed of polyolefin, especially polyethylene and polypropylene, and polyether, especially polyoxymethylene and epoxy resin-based polyether.

4. Aerosol can according to any of Claims 1 to 3, **characterized in that** the at least one silicone precursor comprises
• as hydrolysable silane at least one crosslinker from the group of methyltrimethoxysilane, methyltriethoxysilane, vinyltrimethoxysilane, vinyltriethoxysilane, methylphenyldimethoxysilane, 3,3,3-trifluoropropyltrimethoxysilane, methyltriacetoxysilane, vinyltriacetoxysilane, ethyltriacetoxysilane, dibutoxydiacetoxysilane, phenyltripropionoxysilane, methyltris(methylethylketoximo)silane, vinyltris(methylethylketoximo)silane, methyltris(methylethylketoximo)silane, methyltris(isopropenoxy)silane and vinyltris(isopropenoxy)silane
and/or
• at least one oligosiloxane or polysiloxane which is able, with the at least one crosslinker, to form a crosslinked, rubber-elastic silicone, preferably a polydimethylsiloxane, especially a polydimethylsiloxane containing silanol groups.

5. Aerosol can according to any of the preceding claims, **characterized in that** the mould is a core box, more particularly a core box made of metal.

6. Aerosol can according to any of the preceding claims, **characterized by** at least one of the following features:
• The container consists of metal, optionally metal with a polymeric inside coating.
• The riser tube consists of the water-free polymer material.
• The valve consists in substantial parts, optionally completely, of the water-free polymer material.
• The spraying head consists in substantial parts, optionally completely, of the water-free polymer material.
• The aerosol can, besides the stated parts, comprises additional parts, e.g. seals, made of the water-free polymer material.

7. Aerosol can according to any of the preceding claims, **characterized by** at least one of the following features:
• The propellant comprises at least one gas from the group of propane, butane, isobutane, dimethyl ether and nitrogen.
• The coating composition comprises at least one anhydrous solvent.
• The coating composition comprises at least one particulate solid, especially as pigment and/or as additive and/or as filler.
• The coating composition contains the at least one silicone precursor in a fraction in the range from 1 wt% to 15 wt%.
• The coating composition contains the at least one anhydrous solvent in a fraction in the range from 40 wt% to 60 wt%.
• The coating composition contains the at least one particulate solid in a fraction in the range from 1 wt% to 40 wt%.

8. Set for forming a polymeric mould release layer in a mould, comprising a first aerosol can according to any of the preceding claims and a second aerosol can which is filled with at least one functionalized silane having adhesion-promoting properties.

9. Set according to Claim 8, **characterized in that** the second aerosol can comprises at least one silane of the formula (R₁O)₃Si-(CH₂)ₙ-NH-(CH₂)m-X or (R₁O)₃Si-(CH₂)ₙ-O-(CH₂)m-X or (R₁O)₃Si-(CH₂)ₙ-NH-(CH₂)m-NH-(CH₂)ₙ-Si(OR₁)₃ where R₁ is a C₁ to C₅ alkyl group and n is 1-5 and m is 1-5 and X is an amine group or an epoxy group, more particularly a silane from the group of 3-glycidyloxypropyltrimethoxysilane, N-(3-(trimethoxysilyl)propyl)ethylenediamine and N,N'-bis[3-(trimethoxysilyl)propyl]ethylenediamine.

10. Set according to either of Claims 8 and 9, **characterized by** at least one of the following features:
• The second aerosol can comprises a propellant, more particularly at least one gas from the group of propane, butane, isobutane, dimethyl ether and nitrogen.
• The second aerosol can comprises at least one anhydrous solvent.

11. Set according to any of Claims 8 to 10, comprising a third aerosol can which is filled with at least one liquid silicone oil remover, more particularly from the group of surfactants, benzine, alcohols, aromatic hydrocarbons and aliphatic hydrocarbons.

12. Method for forming a polymeric mould release layer in a mould, using a set according to any of Claims 8 to 11, comprising the steps of
• functionalizing a surface of the mould by spraying the functionalized silane having adhesion-promoting properties onto the surface using the second aerosol can, and
• spraying the coating composition onto the functionalized surface using the first aerosol can.

## Revendications

1. Bombe aérosol pour la pulvérisation d'une composition de revêtement pour la formation d'une couche polymère de démoulage dans un outil de moulage,
- la bombe aérosol comprenant un contenant, une vanne, un tube vertical et une tête de pulvérisation munie d'une ouverture de sortie,
- le contenant étant rempli avec la composition de revêtement,
- la composition de revêtement comprenant au moins un précurseur de silicone et se présentant en mélange avec un agent gonflant, et
- la bombe aérosol comprenant au moins une partie en matière plastique, qui rentre en contact direct avec la composition de revêtement lors de l'utilisation conforme de la bombe aérosol,
**caractérisée en ce que**
- ledit au moins un précurseur de silicone comprend au moins un silane hydrolysable et **en ce que** ladite au moins une partie en matière plastique est constituée par un matériau polymère anhydre qui n'a pas été formé par une réaction de polycondensation.

2. Bombe aérosol selon la revendication 1, **caractérisée en ce que** ledit au moins un matériau polymère a été formé par polymérisation en chaîne ou polyaddition.

3. Bombe aérosol selon l'une quelconque des revendications 1 ou 2, **caractérisée en ce que** ledit au moins un matériau polymère comprend au moins un matériau du groupe comprenant les polyoléfines, notamment le polyéthylène et le polypropylène, et les polyéthers, notamment le polyoxyméthylène et les polyéthers à base de résines époxyde.

4. Bombe aérosol selon l'une quelconque des revendications 1 à 3, **caractérisée en ce que** ledit au moins un précurseur de silicone comprend :
- en tant que silane hydrolysable, au moins un agent de réticulation du groupe comprenant le méthyltriméthoxysilane, le méthyltriéthoxysilane, le vinyltriméthoxysilane, le vinyltriéthoxysilane, le méthylphényldiméthoxysilane, le 3,3,3-trifluoropropyltriméthoxysilane, le méthyltriacétoxysilane, le vinyltriacétoxysilane, l'éthyltriacétoxysilane, le dibutoxydiacétoxysilane, le phényltripropionoxysilane, le méthyl-tris-(méthyléthylcétoximo)silane, le vinyl-tris-(méthyléthylcétoximo)silane, le méthyl-tris-(méthyléthylcétoximino)silane, le méthyl-tris-(isopropénoxy)silane et le vinyl-tris-(isopropénoxy)silane,
et/ou
- au moins un oligo- ou polysiloxane, qui peut former avec ledit au moins un agent de réticulation une silicone réticulée à l'élasticité du caoutchouc, de préférence un polydiméthylsiloxane, notamment un polydiméthylsiloxane contenant des groupes silanol.

5. Bombe aérosol selon l'une quelconque des revendications précédentes, **caractérisée en ce que** l'outil de moulage consiste en une boîte à noyaux, notamment une boîte à noyaux en métal.

6. Bombe aérosol selon l'une quelconque des revendications précédentes, **caractérisée par** au moins une des caractéristiques suivantes :
- le contenant est constitué par un métal, éventuellement un métal muni d'un revêtement intérieur en polymère,
- le tube vertical est constitué par le matériau polymère anhydre,
- la vanne est constituée essentiellement en parties, éventuellement en totalité, par le matériau polymère anhydre,
- la tête de pulvérisation est constituée essentiellement en parties, éventuellement en totalité, par le matériau polymère anhydre,
- la bombe aérosol comprend en plus des parties mentionnées encore d'autres parties, p. ex. des joints, en le matériau polymère anhydre.

7. Bombe aérosol selon l'une quelconque des revendications précédentes, **caractérisée par** au moins une des caractéristiques suivantes :
- l'agent gonflant comprend au moins un gaz du groupe comprenant le propane, le butane, l'isobutane, l'éther diméthylique et l'azote,
- la composition de revêtement comprend au moins un solvant anhydre,
- la composition de revêtement comprend au moins un solide particulaire, notamment en tant que pigment et/ou en tant qu'additif et/ou en tant que charge,
- la composition de revêtement contient ledit au moins un précurseur de silicone en une proportion dans la plage allant de 1 % en poids à 15 % en poids,
- la composition de revêtement contient ledit au moins un solvant anhydre en une proportion dans la plage allant de 40 % en poids à 60 % en poids,
- la composition de revêtement contient ledit au moins un solide particulaire en une proportion dans la plage allant de 1 % en poids à 40 % en poids.

8. Ensemble pour la formation d'une couche polymère de démoulage dans un outil de moulage, comprenant une première bombe aérosol selon l'une quelconque des revendications précédentes et une deuxième bombe aérosol, qui est remplie avec au moins un silane fonctionnalisé à propriétés de promoteur d'adhésion.

9. Ensemble selon la revendication 8, **caractérisé en ce que** la deuxième bombe aérosol comprend au moins un silane de formule (R₁O)₃Si-(CH₂)ₙ-NH-(CH₂)ₘ-X ou (R₁O)₃Si-(CH₂)ₙ-O-(CH₂)ₘ-X ou (R₁O)₃Si-(CH₂)ₙ-NH-(CH₂)ₘ-NH-(CH₂)ₙ-Si(OR₁)₃ avec R₁ = un groupe alkyle en C₁ à C₅ et n = 1 à 5 et m = 1 à 5 et X = un groupe amino ou époxy, notamment un silane du groupe comprenant le 3-glycidyloxypropyltriméthoxysilane, la N-(3-(triméthoxysilyl)propyl)éthylène-diamine et la N,N'-bis[3-(triméthoxysilyl)propyl]éthylène-diamine.

10. Ensemble selon l'une quelconque des revendications 8 ou 9, **caractérisé par** au moins une des caractéristiques suivantes :
- la deuxième bombe aérosol contient un agent gonflant, notamment au moins un gaz du groupe comprenant le propane, le butane, l'isobutane, l'éther diméthylique et l'azote,
- la deuxième bombe aérosol contient au moins un solvant anhydre.

11. Ensemble selon l'une quelconque des revendications 8 à 10, comprenant une troisième bombe aérosol, qui est remplie avec au moins un agent d'élimination des huiles de silicone liquide, notamment du groupe comprenant les tensioactifs, l'essence, les alcools, les hydrocarbures aromatiques et les hydrocarbures aliphatiques.

12. Procédé de formation d'une couche polymère de démoulage dans un outil de moulage utilisant un ensemble selon l'une quelconque des revendications 8 à 11, comprenant les étapes suivantes :
- la fonctionnalisation d'une surface de l'outil de moulage par pulvérisation du silane fonctionnalisé à propriétés de promoteur d'adhésion en utilisant la deuxième bombe aérosol sur la surface, et
- la pulvérisation de la composition de revêtement en utilisant la première bombe aérosol sur la surface fonctionnalisée.
